# EUROPÄISCHE PATENTANMELDUNG

(11) **EP 0 841 364 A1**
(43) Veröffentlichungstag der Anmeldung: **13.05.1998**
(21) Anmeldenummer: 97119362.8
(22) Anmeldetag: 05.11.1997
(51) Int. Cl.: C08J 3/21, C04B 20/10

(54) **Pulverförmige Polymerzusammensetzungen**

(30) Priorität: 06.11.1996 DE 19645732
(71) Anmelder: BASF AKTIENGESELLSCHAFT, 67056 Ludwigshafen (DE)
(72) Erfinder: Sack, Heinrich, 67454 Hassloch (DE); Teichmann, Helmut, 67098 Bad Dürkheim (DE); Wistuba, Eckehardt, 67098 Bad Dürkheim (DE); Angel, Maximilian, 67105 Schifferstadt (DE); Beckerle, Wilhelm Friedrich, 67240 Bobenheim-Roxheim (DE); Füssl, Rüdiger, 67435 Neustadt (DE); Knight, Jeffrey, 68167 Mannheim (DE); Krämer, Richard, 67071 Ludwigshafen (DE); Roser, Joachim, 68165 Mannheim (DE)
(74) Vertreter: Kinzebach, Werner, Dr.

(57) **Zusammenfassung**

Die Erfindung betrifft eine pulverförmige Polymerzusammensetzung, umfassend
a) einen partikelförmigen mineralischen Träger mit großer spezifischer Oberfläche und
b) eine auf den Träger aufgebrachte Polymerdispersion sowie
ein Verfahren zur Herstellung dieser pulverförmigen Polymerzusammensetzung; deren Verwendung zur Herstellung von Baustoffen;
sowie polymermodifizierte Baustoffe, wie Bitumen, Trockenmörtel, Pulverkleber, pulverförmige Anstrichzubereitungen und Spachtelmassen, enthaltend diese Polymerzusammensetzungen.

## Beschreibung

Die Erfindung betrifft pulverförmige Polymerzusammensetzungen, Verfahren zu deren Herstellung sowie Baustoffe, welche diese Polymerzusammensetzungen enthalten.

Polymerbeimischungen für Baustoffe, wie Bitumen, Mörtel, Spachtelmassen, Kleber und Anstrichzubereitungen, sind bekannt und weit verbreitet. Polymere oder Polymer-Gemische können diesen Produkten beispielsweise in fester oder in flüssiger, meist wäßriger Form beigemischt werden.

Wäßrige Dispersionen von Acrylsäureester-Styrol-Copolymeren dienen beispielsweise zur Herstellung von Bauklebstoffen, Fliesenklehstoffen, Anstrichfarben und Imprägniermitteln. Ist eine hohe Viskosität und ein hoher Feststoffgehalt erwünscht, wie z.B. bei Bauklebstoffen, wird eine Polymerdispersion mit schnell laufenden Zwangsmischern in die vorgelegte Klebstoffmasse eingearbeitet. Anstrichfarben werden im allgemeinen in hochtourigen Rührwerken, z.B. Dissolvern, in der Weise hergestellt, daß das Füllstoff/Pigment-Gemisch vordispergiert, mit Anteigungshilfsmitteln vermischt und erst zum Schluß mit der Dispersion versetzt wird.

Wäßrige Dispersionen von Butadien-Styrol-Copolymeren dienen zur Verbesserung der mechanischen Eigenschaften von Asphalt und der Witterungsbeständigkeit von Beschichtungen auf Basis von anionischen und nichtionischen Bitumenemulsionen oder Bitumenklebe- und spachtelmassen. Sie verleihen ihnen eine höhere Wärmestandfestigkeit und bessere Kälteflexibilität. Im allgemeinen wird die Polymerdispersion entweder bereits bei der Herstellung der Bitumenemulsion in die wäßrige Vorlage eingebracht oder in die vorzugsweise produktionswarme Bitumenemulsion eingemischt.

Die Verwendung wäßriger Polymerdispersionen ist jedoch mit erheblichen Nachteilen verbunden. So ist z.B. die Lagerung der wäßrigen Dispersionen nicht unproblematisch, da sie nicht mit korrosionsempfindlichen Metallen wie Eisen, Kupfer, Zink und Aluminium oder Legierungen davon in Berührung kommen dürfen. Sie sind außerdem empfindlich gegen starke Erwärmung sowie gegen Frosteinwirkung. Außerdem müssen die Dispersionen vor dem Befall durch Mikroorganismen geschützt werden, was die Zugabe von Konservierungsmitteln und unter Umständen aufwendige Maßnahmen zur Tankhygiene notwendig macht. Die Dispersionen sind darum nur etwa 6 bis 12 Monate bei etwa 10 bis 30°C in dicht verschlossenen Behältern lagerfähig.

Die Verwendung wäßriger Dispersionen für die Modifizierung von Bitumen oder Asphalt in heißem Zustand ist besonders problematisch, da durch die hierbei auftretende spontane Wasserdampfentwicklung die Dispersion nur sehr langsam eingearbeitet werden kann. Außerdem besteht Unfallgefahr durch Spritzen und Siedeverzug.

Aus den genannten Gründen ist es häufig sinnvoll, Polymere oder Polymergemische in fester Form, meistens als Pulver, in die zu modifizierenden Produkte einzuarbeiten.

Es ist bekannt, Polymerpulver durch Versprühen von wäßrigen Polymerdispersionen in einem Heißluftstrom herzustellen. Bei Polymeren, die Glastemperaturen (T_{g}) unterhalb von etwa 50°C besitzen, müssen zusätzlich Sprühhilfsmittel zugesetzt werden, um zu verhindern, daß die Polymerteilchen im Trockner verkleben. Als Sprühhilfsmittel können neben wasserunlöslichen inerten Zusätzen, wie hochdisperser Kieselsäure, auch wäßrige Copolymerisatlösungen auf Basis von Vinylpyrrolidon und Vinylacetat (DE-A-3143071) sowie wasserlösliche sulfonathaltige Kondensationsprodukte aus Melamin und Formaldehyd (DE-A-2049114) zugesetzt werden.

Die Verwendung von Sprühhilfsmitteln ist jedoch mit Nachteilen verbunden. So besteht z.B. das Problem, daß die polymeren Sprühhilfsmittel häufig deutlich andere T_{g}-Werte und somit andere physikalisch-chemische Eigenschaften als das sprühzutrocknende Polymer besitzen. Bei Einarbeitung der sprühgetrockneten Polymere in die Endprodukte besteht deshalb das Problem, deren Eigenschaften gezielt einzustellen. Weiterhin ist bekannt, daß Sprühhilfsmittel üblicherweise auch eine gewisse grenzflächenaktive Wirkung aufweisen, die z.B. die Benetzung der Partikel im mineralischen Bau- oder Bauhilfsstoff durch das Anmachwasser und damit das Fließverhalten des gebrauchsfertig angemachten, polymermodifizierten Stoffes nachteilig beeinflußt (DE-A-19623412).

Diese Nachteile, wie auch der hohe Energiebedarf der Sprühtrocknung, werden in Kauf genommen, um die Polymere in Form rieselfähiger klebfreier Pulver zu erhalten.

Der Erfindung liegt daher die Aufgabe zugrunde, eine Polymerzusammensetzung bereitzustellen, welche die oben genannten Nachteile vermeidet. Insbesondere sollte eine Polymerzusammensetzung bereitgestellt werden, die für lange Lager- und Transportzeiten geeignet, weitgehend unempfindlich gegen Frost und hohe Temperaturen ist, keine Konservierungsmittelzusätze erfordert und schneller und gefahrloser als herkömmliche wäßrige Dispersionen in eine heiße Vorlage einarbeitbar ist. Sie sollte außerdem unter geringem Energieverbrauch herstellbar sein und die Eigenschaften von Produkten, die mit der Polymerzusammensetzung modifiziert werden, nicht nachteilig beeinflussen.

Gelöst wird diese Aufgabe durch Bereitstellung einer pulverförmigen Polymerzusammensetzung, umfassend
a) einen partikelförmigen mineralischen Träger mit großer spezifischer Oberfläche und
b) eine auf den Träger aufgebrachte, vorzugsweise wäßrige, Dispersion eines Polymers.

Überraschenderweise wurde nun gefunden, daß man durch Einarbeitung der Polymerdispersion in den partikelförmigen mineralischen Träger mit einer großen spezifischen Oberfläche klebfreie, rieselfähige und leicht zu verarbeitende Pulver erhält.

Die erfindungsgemäßen pulverförmigen Polymerzusammensetzungen besitzen weitere überraschendende Vorteile. Sie sind ohne großen verfahrenstechnischen Aufwand einfach herzustellen, einfach und billig zu verpacken und eignen sich besonders gut für lange Transport- und Lagerzeiten, da keine Konservierungsmittel erforderlich sind und keine Frostgefährdung auftreten kann. Außerdem sind sie leicht und schnell in heiße Vorlagen, wie z.B. in heiße Bitumenschmelze, einarbeitbar, ohne daß Personen durch Spritzen oder Siedeverzug gefährdet werden. Auch die Einarbeitung in andere Baustoffe, wie Trockenmörtel, Pulverkleber, pulverförmige Anstrichzubereitungen und Spachtelmassen, verläuft problemlos.

Die zur Herstellung der erfindungsgemäßen Polymerzusammensetzung einsetzbaren Polymere unterliegen keiner besonderen Beschränkung. Wesentlich ist, daß sie sich gut auf die erfindungsgemäß verwendeten Träger aufbringen lassen und in dieser trägergebundenen Form nach Einarbeitung in das Endprodukt noch die gewünschte modifizierende Wirkung auf die Produkteigenschaften besitzen.

Als Beispiele für erfindungsgemäß geeignete Polymere können Polymere auf der Basis von Acrylsäure, Methacrylsäure, Acrylsäure- und Methacrylsäureestern, Vinylestern, Vinylchlorid, Vinylethern, Butadien, Isopren, Chloropren, Itaconsäure, Maleinsäure, Fumarsäure, Maleinsäureanhydrid und insbesondere Acrylsäureester-Styrol-Copolymere, Acrylsäureester-Styrol-Acrylsäure-Terpolymere, Butadien-Styrol-Copolymere , Butadien-Styrol-Acrylsäure-Terpolymere und Vinylpropionat-Vinylchlorid-Copolymere genannt werden. Bevorzugt sind Polymere oder Polymergemische, deren Glastemperatur etwa -80 bis +60°C, insbesondere etwa -60 bis +50°C beträgt.

Angaben über Monomerzusammensetzung und Glastemperatur einzelner bevorzugter Polymere sowie über Feststoffgehalt und pH-Bereich einzelner bevorzugter wäßriger Dispersionen dieser Polymere sind der folgenden Tabelle 1 zu entnehmen.

**Tabelle 1**

| Dispersion | pH-Bereich | Feststoff-Gehalt (Gew.-%) | Monomere ¹⁾ (Gew.-%) | Glastemperatur (°C) |
|---|---|---|---|---|
| D1 | 7,5-9,0 | 50±1 | 50 BA | 15 |
| | | | 46 S | |
| | | | 4 AS | |
| D2 | 7,0-8,5 | 57±1 | 60 BA | -8 |
| | | | 40 S | |
| D3 | 6,0-7,0 | 50±1 | 31 BU | 25 |
| | | | 64 S | |
| | | | 5 AS | |
| D4 | 10,0-11,0 | 66±1 | 68 BU | -50 |
| | | | 32 S | |
| D5 | 10,0-11,0 | 67±1 | 68 BU | -50 |
| | | | 32 S | |
| D6 | 4,0-6,0 | 50±1 | 53 VP | 28 |
| | | | 47 VC | |

| | | | | |
|---|---|---|---|---|
| ¹⁾ AS = Acrylsäure, BA = Butylacrylat, BU = Butadien, S = Styrol, VC = Vinylchlorid, VP = Vinylpropionat | | | | |

Der erfindungsgemäß verwendete partikelförmige mineralische Träger sollte vorzugsweise einen mittleren Teilchendurchmesser von etwa 0,01 bis 150 µm, wie z.B. 0,01 bis 5 µm oder 5 bis 100 µm, eine spezifische Oberfläche, ermittelt z.B. durch Stickstoff-Adsorption (nach DIN 66131), von etwa 0,5 bis 120 m²/g und/oder eine Ölzahl von etwa 10 bis 30 g Öl auf 100 g aufweisen.

Als mineralische Träger, in die die wäßrigen Dispersionen oben genannter Polymere eingearbeitet werden, seien insbesondere Kreide, Calcit, Dolomit, Quarzmehl, Titandioxid, Aluminiumsilikat, Talkum, Glimmer, Kieselgur, Gips, Magnesit, Schiefermehl, Mikrosilika, Filteraschen und Bariumsulfat und Gemische davon, beispielhaft genannt. Unter diesen mineralischen Trägern sind Dolomit, Aluminiumsilikat, Kreide und Glimmer bevorzugt.

Gemäß einer bevorzugten Ausführungsform verwendet man mikronisierten Dolomit, wie z.B. Dolomit, der von der Fa. Micro Minerals unter dem Markennamen Microdol vertrieben wird, kryptokristalline Champagne-Kreide mit rhomboedrischer Teilchenform, bekannt als Omya-Kreide und naß vermahlenen Glimmer der Fa. Microfine Minerals. Ganz besonders bevorzugte Träger sind Dolomite mit mittleren Teilchendurchmessern von 1,5 bis 3 µm, einer Ölzahl von 12 bis 21 und einer spezifischen Oberfläche von 2 bis 5 m²/g (wie z.B. die Handelsprodukte Microdol 1, Microdol Extra und Microdol Super), Omya-Kreiden mit einem mittleren Teilchendurchmesser von 0,5 bis 3 µm, einer Ölzahl von 15 bis 23 und einer spezifischen Oberfläche von 1 bis 11 m²/g sowie Aluminiumsilikat mit einer mittleren Teilchengröße von 0,01 bis 0,05 µm und einer spezifischen Oberfläche von 100 bis 120 m²/g.

Gemäß einer weiteren bevorzugten Ausführungsform umfasst der mineralische Träger eine, mehrere oder alle mineralischen Komponenten eines Baustoffs. Gegebenenfalls können diese im Gemisch mit anderen nichtmineralischen Zusätzen, die üblicherweise in solchen Baustoffen verwendet werden, vorliegen. Außerdem ist nicht erforderlich, daß sämtliche mineralischen Komponenten der Mischung obige Kriterien in bezug auf Teilchengröße und Oberfläche erfüllen.

Gemäß einer weiteren bevorzugten Ausführungsform wird der mineralische Träger mit einer Faserkomponente kombiniert. Hierbei kann es sich grundsätzlich um eine organische oder anorganische, natürliche oder synthetische Faser handeln. Besonders bevorzugt sind jedoch Zellulosefasern. Vorzugsweise verwendet man Fasern mit einer durchschnittlichen Länge von etwa 100 bis 1000 µm, vorzugsweise von etwa 500 bis 800 µm, und einer durchschnittlichen Dicke von etwa 10 bis 30 µm, vorzugsweise etwa 15 bis 25 µm. Der Faseranteil kann je nach Verwendungszweck stark variieren, liegt aber gewöhnlich etwa im Bereich von etwa 0,1 bis 20 Gew.-%, bezogen auf das Gesamtgewicht des mineralischen Trägers.

Gegenstand der Erfindung ist außerdem ein Verfahren zur Herstellung der erfindungsgemäßen pulverförmigen Polymerzusammensetzungen, das dadurch gekennzeichnet ist, daß man eine, vorzugsweise wäßrige, Dispersion des Polymers in einen partikelförmigen mineralischen Träger gemäß obiger Definition einarbeitet.

Die Polymerdispersionen werden beispielsweise unter schnellem Rühren, jeweils in kleinen Mengen, in einen vorgelegten und gegebenenfalls vorgewärmten Träger, wie z.B. Dolomit, eingetropft oder eingesprüht. Für die großtechnische Herstellung können die üblichen Mischapparaturen, bekannt z.B. aus Ullmann, Encyclopädie der technischen Chemie, 3. Aufl., 1951, Band 1, S. 713 ff, wie Tonnenmischer, Konusmischer, Pflugschaufelmischer, bevorzugt jedoch Dissolver, Trommelmischer oder Wirbelmischer verwendet werden. Es lassen sich pulverförmige Polymerzusammensetzungen mit einem Polymergehalt von 2 bis 20 Gew.-%, bezogen auf das Gesamtgewicht der Zusammensetzung, herstellen. Eine anschließende Trocknung ist in der Regel nicht nötig. Die Zusammensetzungen liegen auch ohne Trocknung überraschenderweise als gut rieselfähige, klebfreie Pulver vor. Der Polymeranteil kann je nach Bedarf durch Zwischentrocknung bei niedrigen Temperaturen, um ein Aufschmelzen der Polymere auf den mineralischen Träger zu vermeiden, und nochmaliges Einmischen von Polymerdispersion auf bis zu etwa 60 Gew.-%, bezogen auf die Mischung, erhöht werden.

Die erfindungsgemäß verwendeten Polymerdispersionen weisen in der Regel Feststoffgehalte von 15 bis 75 Gew.-%, bevorzugt von 40 bis 70 Gew.-%, auf. Sie werden bevorzugt durch Emulsionspolymerisation hergestellt. Bei der Emulsionspolymerisation werden polymerisierbare, olefinisch ungesättigte Monomere in Wasser mit Hilfe von grenzflächenaktiven Verbindungen emulgiert und unter Verwendung von wasserlöslichen Initiatoren polymerisiert. Verfahren zur Emulsionspolymerisation sind bekannt, z.B. aus Ullmann, Encyclopädie der technischen Chemie, 3. Aufl., 1963, Band 14, S. 127 ff.

Gegenstand der Erfindung sind auch Baustoffe, welche unter Verwendung wenigstens einer pulverförmigen Polymerzusammensetzung gemäß vorliegender Erfindung hergestellt wurden. Erfindungsgemäße polymermodifizierte Baustoffe sind insbesondere ausgewählt unter Bitumenprodukten, wie Asphalt, bituminöse Klebe-, Dichtungs-, Spachtel- und Anstrichmassen und Isoliermaterialien, und nichtbituminösen, zementhaltigen oder zementfreien Produkten, wie Putz, Mörtel, Estrich, Beton, Klebe-, Dichtungs-, Spachtel- und Anstrichmassen, sowie Grundierungen. Die polymermodifizierten Baustoffe stellt man üblicherweise her, indem man die pulverförmige Polymerzusammensetzung in pulverförmige oder pastöse, gegebenenfalls erwärmte Baustoffbasis, einarbeitet. Baustoffbasis ist beispielsweise eine Bitumenschmelze oder ein Gemisch aus Mineralstoffen und Zusätzen, wie sie in pulverförmigen Baustoffen, wie z.B. Trockenmörteln und dergleichen verwendet werden. Übliche Baustoffzusätze sind z.B. Entschäumer, Verzögerer, Verdickungsmittel, Wasserrückhaltemittel, Pigmentverteiler und dergleichen. Art und Menge des eingeführten Polymers variieren je nach Verwendungszweck des Baustoffs. Üblicherweise liegt die Menge an eingeführtem Polymer bei etwa 0,5 bis 30 Gew.-%, bezogen auf das Gesamtgewicht des Baustoffs. Beispielsweise liegt der Polymergehalt von Pulverklebern bei etwa 3 bis 20 Gew.-%, von Trockenmörteln bei unter 10 Gew.-% und von wäßrigen Anstrichen bei etwa 5 bis 15 Gew.-% (entsprechend etwa 8 bis 25 Gew.-% bezogen auf eine pulverförmige Formulierung).

Gegenstand der Erfindung sind auch solche, vorzugsweise pulverfömigen Baustoffe, die man durch direktes Einarbeiten einer wäßrigen Polymerdispersion obiger Definition in ein Gemisch pulverförmiger, mineralischer und gegebenenfalls nicht-mineralischer Komponenten des Baustoffs erhält.

Eine erfindungsgemäß bevorzugte Ausführungsform betrifft polymermodifizierte Bitumenprodukte, die Bitumen in einer üblichen, bei Raumtemperatur festen, halbfesten oder flüssigen, vorzugsweise festen Form und eine erfindungsgemäße pulverförmige Polymerzusammensetzung enthalten. Polymermodifizierter Bitumen eignet sich zur Verwendung in Isolierbeschichtungen, z.B. im Bautenschutz, in elektrischen Isoliermaterialien, in Tränkungs-, Kleb- oder Beschichtungsmitteln für die Dachpappenindustrie und vorzugsweise in Heißasphalten im Straßenbau, z.B. im sogenannten "Flüsterasphalt". Vorzugsweise liegt der Polymergehalt in polymermodifizierten Bitumenprodukten im Bereich von 1 bis 10 Gew.-%, bezogen auf das Gesamtgewicht des Produktes

Besonders bevorzugt ist polymermodifizierter Bitumen, der als Polymer ein Butadien-Styrol-Copolymer aus 68 Gew.-% Butadien und 32 Gew.-% Styrol, vorzugsweise in einer Menge von 1 bis 10 Gew.-%, bezogen auf das Gesamtgewicht des polymermodifizierten Bitumens, und als Träger mikronisierten Dolomit, Omya-Kreide, Aluminiumsilikat oder naß vermahlenen Glimmer mit einem mittleren Teilchendurchmesser von etwa 0,01 bis 5 µm beinhaltet. Der Träger ist dabei in einem Anteil von etwa 10 bis 40 Gew.-%, bezogen auf das Gesamtgewicht des Bitumens, enthalten.

Ein weiteres bevorzugtes Bitumenprodukt erhält man durch Einarbeitung einer Polymerzusammensetzung, die als Träger ein Gemisch aus partikelförmigen mineralischen Träger gemäß obiger Definition und eine Faserkomponente enthält. Derartige Bitumenzusammensetzungen besitzen eine besonders vorteilhafte Wärmestandfestigkeit. Vorzugsweise verwendet man Zellulosefasern mit einer durchschnittlichen Länge von etwa 500 bis 800 µm und einer durchschnittlichen Dicke von etwa 10 bis 30 µm. Der Faseranteil liegt, bezogen auf Bitumen bei etwa 0,5 bis 2 Gew.-%, insbesondere etwa bei 1 Gew.-%. Besonders vorteilhaft ist auch bei den faserverstärkten Bitumenprodukten die Verwendung von Butadien-Styrol-Copolymeren als Modifikator.

Die erfindungsgemäßen polymermodifizierten Bitumen werden vorzugsweise hergestellt, indem man die erfindungsgemäße pulverförmige Polymerzusammensetzung in eine Bitumenemulsion oder in eine Bitumenschmelze einarbeitet.

Weitere bevorzugte Ausführungsformen der Erfindung betreffen Pulverkleber, Anstrichmittel, Trockenmörtel und Spachtelmassen, welche wenigstens eine erfindungsgemäße pulverförmige Polymerzusammensetzung enthalten. Sie sind in herkömmlicher Weise erhältlich, indem man die erfindungsgemäßen pulverförmigen Polymerzusammensetzungen, wie oben beschrieben, in das Endprodukt einarbeitet oder indem man direkt die flüssigen Polymerdispersionen in das Endprodukt einarbeitet.

Gegenstand der Erfindung ist außerdem die Verwendung einer erfindungsgemäßen pulverförmigen Polymerzusammensetzung zur Herstellung von Baustoffen gemäß obiger Definition.

Die folgenden Beispiele erläutern die Erfindung ohne sie auf diese zu beschränken:

### Beispiel 1

Bitumenmodifikation durch eine pulverförmige Polymerzusammensetzung aus Dolomit und darauf abgeschiedenem Butadien-Styrol-Copolymer

400 kg der durch Emulsionspolymerisation hergestellten Dispersion D4 (Tabelle 1) wurden in einem Dissolver in 1000 kg vorgelegten Dolomit mit einer mittleren Teilchengröße von 2,0 µm, einer spezifischen Oberfläche von 3,9 m²/g und einer Ölzahl von 17 bis 18 g/100g (erhältlich unter dem Markennamen Mikrodol® Extra der Fa. Micro Minerals) eingearbeitet. Der Durchmischungsprozeß wurde 20 Minuten bei 2000 Umdrehungen pro Minute fortgeführt. Hierdurch wurde überraschenderweise ein klebfreies, rieselfähiges Pulver erhalten.

25 kg dieser pulverförmigen Polymerzusammensetzung wurden in einem 200-l-Rührbehälter unter stetigem Rühren in 75 l einer 180°C heißen Schmelze von B80-Normbitumen nach DIN 1995, erhältlich unter dem Markennamen Mexphalt® von der Firma Shell, eingearbeitet. Nach 30-minütigem Rühren bei 300 Umdrehungen pro Minute war die Mischung homogen und zur Weiterverarbeitung geeignet.

Es zeigte sich, daß die Einarbeitung der pulverförmigen Polymerzusammensetzung vorteilhafterweise nicht nur schneller und einfacher als die der herkömmlich verwendeten wäßrigen Dispersion verlief sondern auch gefahrlos, da Spritzen oder Siedeverzug nicht auftraten.

### Beispiel 2

Bestimmung der Produkteigenschaften einer Bitumenmasse, die mit einer erfindungsgemäßen pulverförmigen Polymerzusammensetzung modifiziert wurde

Es wurden acht Heißbitumen-Mischungen mit der in Tabelle 2 angegebenen Zusammensetzung hergestellt. Mischung 1 diente als Kontrolle und enthielt nur unmodifizierten B80-Normbitumen. Die Mischungen 4, 6 und 8 beinhalteten unterschiedliche Mengen Microdol 1 (mikronisierter Dolomit, mittlerer Teilchendurchmesser 2,65 µ). Die Mischungen 2, 3, 5 und 7 enthielten einen Butadien-Styrol-Copolymer-Zusatz von 5%, bezogen auf das Gewicht der Mischung. Mischung 2 wurde durch Zugabe wäßriger Polymerdispersion (D5, Tabelle 1) mit einem Polymergehalt von 67%, bezogen auf das Gewicht der Dispersion, in B80-Bitumen erhalten. Die Mischungen 3, 5 und 7 wurden durch Einarbeitung erfindungsgemäßer Polymerzusammensetzungen mit Polymergehalten von 16,7%, 23% bzw. 28,6%, jeweils bezogen auf das Gewicht der Polymerzusammensetzung, erhalten.

Tabelle 2 zeigt außerdem die Ergebnisse der mechanischen Prüfung (nach DIN 1995) von erfindungsgemäß modifiziertem und nicht modifiziertem Bitumen.

**Tabelle 2**

| Heißbitumen modifiziert mit D5 in Dolomit | | | | | | | | |
|---|---|---|---|---|---|---|---|---|
| Versuch | 1 | 2 | 3 | 4 | 5 | 6 | 7 | 8 |
| Bitumen B 80 | 100 | 95 | 95 | 95 | 95 | 95 | 95 | 95 |
| D5 67%ig | | 7,5 | - | - | - | - | - | - |
| D5 16,7%ig in Dolomit | - | - | 44,6 | - | - | - | - | - |
| D5 23%ig in Dolomit | - | - | - | - | 32,5 | - | - | - |
| D5 28,6%ig in Dolomit | - | - | - | - | - | - | 26 | - |
| Dolomit | - | - | - | 37,1 | - | 25 | - | 18,5 |
| Polymerzusatz in % | - | 5 | 5 | - | 5 | - | 5 | - |
| Erweichungspunkt: °C (Ring und Kugel) | 46 | 55 | 65 | 51 | 61 | 50 | 56 | 50 |
| Penetration: 1/10 mm | 74 | 56 | 42 | 71 | 50 | 69 | 53 | 67 |
| Brechpunkt: °C | -12 | -19 | -17 | -18 | -16 | -18 | -13 | -15 |

Mischung 3 zeigte den höchsten Erweichungspunkt und die geringste Penetration, Mischung 5 einen deutlich niedrigeren Erweichungspunkt und eine höhere Penetration. Die Materialeigenschaften der Mischung 7 waren nur noch unwesentlich günstiger als die der durch Zugabe wäßriger Dispersion erhaltenen Mischung 2. Die Einarbeitung von reinem Dolomit ohne Polymerzusatz führte ebenfalls zu einer, allerdings nicht so stark ausgeprägten, Verbesserung der mechanischen Eigenschaften (Mischungen 4, 6 und 8).

Die erfindungsgemäß modifizierten Bitumenmassen wiesen überraschenderweise einen höheren Erweichungspunkt als die mit der wäßrigen Dispersion modifizierte auf, was eine weitere vorteilhafte Wirkung der vorliegenden Erfindung darstellt.

### Beispiel 3

### Polymermodifizierter Feinspachtel

In einem Mischer wurden 130 kg Quarzsand mit einer mittleren Teilchengröße von 0,15 bis 0,6 mm, 376 kg Quarzmehl mit einer mittleren Teilchengröße von 5 µm, 18 kg Mikrosilika mit einer mittleren Teilchengröße von 1 µm, 417 kg Zement, 0,5 kg Zelluloseether und 10 kg eines handelsüblichen Entschäumers vorgelegt und 97 kg der durch Emulsionspolymerisation hergestellten Dispersion D1 (Tabelle 1) zugegeben. Die Komponenten wurden 25 min bei 2000 Upm durchmischt. Überraschenderweise wurde hierdurch ein klebfreier, rieselfähiger, pulverförmiger Feinspachtel erhalten.

### Beispiel 4

### Polymermodifizierter Armierungsmörtel für Wärmedämm-Verbundsysteme

In einem Mischer wurden 140 kg Quarzsand mit einer mittleren Teilchengröße von 0,15 bis 0,6 mm, 370 kg Kreide mit einer mittleren Teilchengröße von 1,3 µm, 18 kg Mikrosilika mit einer mittleren Teilchengröße von 1 µm, 430 kg Zement, 10 kg eines handelsüblichen Entschäumers und 2 kg Zelluloseether vorgelegt. 60 kg der durch Emulsionspolymerisation hergestellten Dispersion D1 (Tabelle 1) wurden hinzugegeben. Der Durchmischungsprozeß wurde 20 min bei 2100 Upm fortgeführt. Hierdurch wurde überraschenderweise ein klebfreier, rieselfähiger, pulverförmiger Armierungsmörtel erhalten.

### Beispiel 5

### Elastische Dichtungsschlämme

263 kg der Polymerdispersion D2 aus Tabelle 1 und 2 kg eines handelsüblichen Entschäumers wurden in Anlehnung an die Vorschriften in Beispiel 1 in 450 kg vorgelegtes Aluminiumsilikat mit einer mittleren Teilchengröße von 0,03 µm eingerührt, wodurch man ein klebfreies, rieselfähiges Pulver erhielt.

Nach Zwischentrocknung wurde das so erhaltene Pulver in einen Mischer überführt und mit 107 kg Quarzsand (0,08 bis 0,2 mm Teilchengröße), 143 kg Quarzsand (0,2 bis 0,5 mm Teilchengröße) sowie 250 kg Portlandzement und 20 kg handelsüblichem pulverförmigen Entschäumer 20 min bei 2000 Upm vermischt.

Man erhielt eine klebfreie, rieselfähige Trockenkomponente, die lagerfähig ist und vor Gebrauch nur noch mit Wasser angemischt zu werden braucht, um eine elastische Dichtungsschlämme herzustellen.

### Beispiel 6

### Pulverkleber für keramische Fliesen

In einem Mischer wurden 765 kg Kreide mit einer mittleren Teilchengröße von 1,3 µm, 1 kg Natriumpolyphosphat, 5 kg Bentonit, 3 kg Zelluloseether und 2 kg eines pulverförmigen Polyacrylsäuresalzes vorgelegt. 60 kg der durch Emulsionspolymerisation hergestellten Dispersion D1 (Tabelle 1) wurden hinzugegeben. Der Durchmischungsprozeß wurde 20 min bei 2100 Upm fortgeführt. Hierdurch wurde überraschenderweise ein klebfreier, rieselfähiger Pulverkleber erhalten.

## Patentansprüche

1. Pulverförmige Polymerzusammensetzung, umfassend
a) einen partikelförmigen mineralischen Träger mit großer spezifischer Oberfläche und
b) eine auf den Träger aufgebrachte Polymerdispersion.

2. Polymerzusammensetzung nach einem der vorhergehenden Ansprüche, dadurch gekennzeichnet, daß der mineralische Träger eine spezifische Oberfläche von etwa 0,5 bis 120 m²/g aufweist.

3. Polymerzusammensetzung nach einem der vorhergehenden Ansprüche, dadurch gekennzeichnet, daß der mineralische Träger ausgewählt ist unter Kreide, Calcit, Dolomit, Quarzmehl, Titandioxid, Aluminiumsilikat, Talkum, Glimmer, Kieselgur, Gips, Magnesit, Schiefermehl, Filteraschen, Mikrosilika und Bariumsulfat, oder Gemischen davon.

4. Polymerzusammensetzung nach einem der vorhergehenden Ansprüche, dadurch gekennzeichnet, daß der mineralische Träger zusätzlich eine Faserkomponente umfaßt.

5. Polymerzusammensetzung nach einem der vorhergehenden Ansprüche, dadurch gekennzeichnet, daß die Glastemperatur des als wäßrige Dispersion auf den mineralischen Träger aufgebrachten Polymers etwa -80 bis +60°C, insbesondere etwa -60 bis +50°C beträgt.

6. Polymerzusammensetzung nach einem der vorhergehenden Ansprüche, dadurch gekennzeichnet, daß deren Polymergehalt etwa 2 bis 60 Gew.-%, bezogen auf das Gesamtgewicht der Zusammensetzung, beträgt.

7. Verfahren zur Herstellung einer pulverförmigen Polymerzusammensetzung nach einem der Ansprüche 1 bis 6, dadurch gekennzeichnet, daß man die Polymerdispersion in den partikelförmigen mineralischen Träger einarbeitet.

8. Verfahren nach Anspruch 7, dadurch gekennzeichnet, daß man die Polymerdispersion in einem Schritt oder in mehreren Schritten, gegebenenfalls nach Zwischentrocknung, einarbeitet.

9. Polymermodifizierter Baustoff, enthaltend in einer üblichen pulverförmigen, pastösen oder festen Basis wenigstens eine Polymerzusammensetzung nach einem der Ansprüche 1 bis 6.

10. Polymermodifizierter Baustoff nach Anspruch 9, ausgewählt unter Bitumenprodukten, wie Asphalt, bituminöse Klebe-, Dichtungs-, Spachtel- und Anstrichmassen und Isoliermaterialien, und nicht-bituminösen, zementhaltigen oder zementfreien Produkten, wie Putz, Mörtel, Estrich, Beton, Klebe-, Dichtungs-, Spachtel- und Anstrichmassen, sowie Grundierungen.

11. Verfahren zur Herstellung eines polymermodifizierten Bitumenprodukts nach Anspruch 10, dadurch gekennzeichnet, daß man die pulverförmige Polymerzusammensetzung in eine Bitumenemulsion oder in eine Bitumenschmelze einarbeitet.

12. Verfahren zur Herstellung polymermodifizierter pulverförmiger nicht bituminöser Baustoffe nach Anspruch 10, dadurch gekennzeichnet, daß man ein Gemisch, umfassend eine, mehrere oder alle mineralischen Komponenten des Bau- oder Bauhilfsstoffs vorlegt und die Polymerdispersion einarbeitet.
